# EUROPEAN PATENT APPLICATION

(11) **EP 1 139 205 A1**
(43) Date of publication of application: **04.10.2001**
(21) Application number: 01000038.8
(22) Date of filing: 06.03.2001
(51) Int. Cl.: G06F 1/32

(54) **Computer power management in a data processing system based on required battery life**

(30) Priority: 09.03.2000 US 522196
(71) Applicant: International Business Machines Corporation, Armond, NY 10504 (US)
(72) Inventor: Malcolm, Jerry Walter c/o IBM United Kingdom Ltd., Hursley Winchester, Hampshire SO21 2JN (GB); Wynn, Allen Chester c/o IBM United Kingdom Ltd., Hursley Winchester, Hampshire SO21 2JN (GB)
(74) Representative: Burt, Roger James, Dr.

(57) **Abstract**

A method, apparatus, and computer implemented instructions in a data processing system for managing power consumption for a battery in the data processing system. An input identifying an amount of time required for running the data processing system is received. Responsive to the input, the available power in the data processing system is determined. An amount of power usage within the data processing system required to run the data processing system for the amount of time is identified using the available power if possible. The data processing system is set to the identified amount of power usage.

## Description

### BACKGROUND OF THE INVENTION

### Technical Field

The present invention relates generally to an improved data processing system and in particular to a method, apparatus, and computer implemented instructions for managing power resources in a data processing system. Still more particularly, the present invention provides a method, apparatus, and computer implemented instructions for power management in a data processing system based on required battery life.

### Description of Related Art

Computers have become pervasive in today's society. Computers have become commonplace at work, at school, and at home. At work, computers are used for various tasks, such as word processing, spreadsheet generation, and presentations. In addition to workstations and personal computers, mobile computers, such as notebook computers and palmtop computers, are commonly used by users traveling from one place to another. Notebook computers often take the place of a desktop computer and allow a user to take work on trips, such as trips to customer sites. Notebook computers also are used as a means to allow a user to communicate with the office and exchange documents and other data while the user is outside of the office.

These mobile computers are powered by finite power sources, such as lithium batteries. Power management programs and systems allow the user to control power consumption in a mobile computer. Typically, more power is consumed with faster processor speeds. Additionally, more power is consumed as more devices are active on a mobile computer.

In some situations, a user will know how long a battery should last. One such situation is an airplane flight. If a user knows that the flight time will be 3.5 hours, the user will want the battery to last for the duration of the flight. On the other hand, the user wants the best possible performance while using the computer. In this situation, no advantage is gained to have extra battery life remaining when the plane lands. If the performance of the computer is increased too much, the battery will run out of power prior to the end of the flight.
Therefore, it would be advantageous to have an improved method and apparatus for managing power usage in a computer based on a desired amount of computing time.

It is an object of the present invention to provide a technique which alleviates the above drawbacks.

### SUMMARY OF THE INVENTION

According to the present invention provide a method in a data processing system for managing power consumption for a battery in the data processing system, the method comprising: receiving an input identifying an amount of time required for running the data processing system; identifying an amount of available power; responsive to the input, identifying an amount of power usage within the data processing system required to run the data processing system for the amount of time using the available power; and setting the data processing system to the amount of power usage.

Also according to the present invention we provide a data processing system for managing power consumption for a battery in the data processing system, the data processing system comprising: receiving means for receiving an input identifying an amount of time required for running the data processing system; first identifying means for identifying an amount of available power; second identifying means, responsive to the input, for identifying an amount of power usage within the data processing system required to run the data processing system for the amount of time using the available power; and setting means for setting the data processing system to the amount of power usage.

Furthermore according to the present invention we provide a computer program comprising program code means adapted to perform the steps of the above method when the program is run on a computer.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** is a pictorial representation of a data processing system in which the present invention may be implemented in accordance with a preferred embodiment of the present invention;
**Figure 2** is a block diagram of a data processing system shown in which the present invention may be implemented;
**Figure 3** is a diagram of components used in power management based on a required battery life in accordance with a preferred embodiment of the present invention;
**Figure 4** is a flowchart of a process for power management in a data processing system in accordance with a preferred embodiment of the present invention; and
**Figure 5** is a flowchart of a power management process for controlling processor speed in a data processing system in accordance with a preferred embodiment of the present invention.

### DETAILED DESCRIPTION OF THE PREFERRED EMBODIMENT

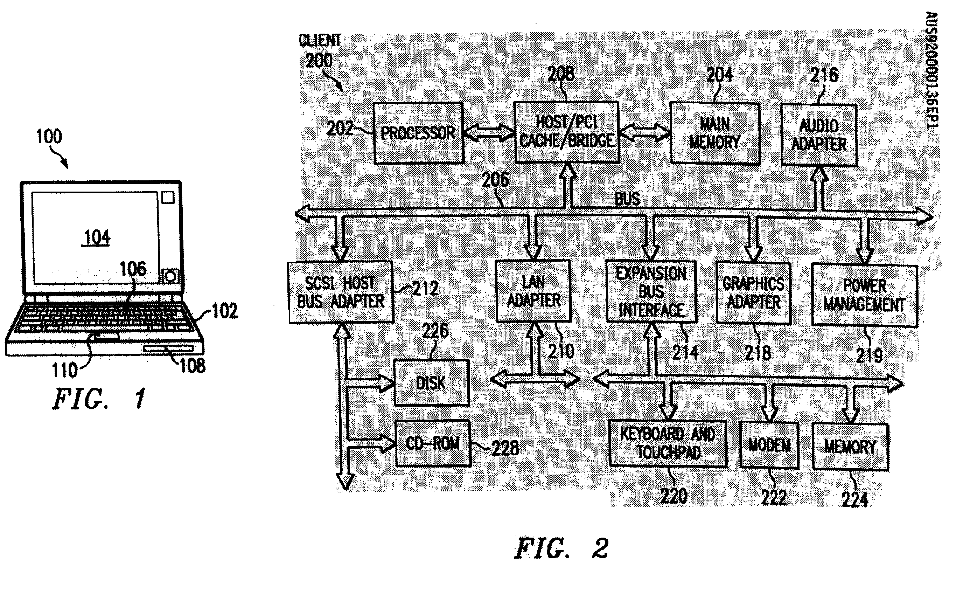

With reference now to the figures and in particular with reference to **Figure** 1, a pictorial representation of a data processing system in which the present invention may be implemented is depicted in accordance with a preferred embodiment of the present invention. A notebook computer **100** is depicted which includes a case **102,** a display **104,** a keyboard **106,** storage devices **108,** and a touchpad **110.** Storage devices **108** may include floppy drives, hard disk drives, and other types of permanent and removable storage media. Additional input devices, in addition to or in place of touchpad **110,** may be included with notebook computer **100,** such as, for example, a joystick, a mouse, a touch screen, a trackball, a microphone, and the like.

Although the depicted representation shows a computer, other embodiments of the present invention may be implemented in other types of data processing systems, such as a desktop computer, a palmtop computer, mobile phone, or a personal digital assistant (PDA). A palmtop computer is a computer small enough to hold in one hand and operate with the other. Palmtops may have specialized keyboards or keypads for data entry applications or have small qwerty keyboards. A PDA is a handheld computer that serves as an organizer for personal information. It generally includes at least a name and address database, a to-do list, and a note taker. PDAs are pen based and use a stylus to tap selections on menus and to enter printed characters. The unit may also include a small on-screen keyboard, which is tapped with the pen

With reference now to **Figure 2,** a block diagram of a data processing system is shown in which the present invention may be implemented. Data processing system **200** is an example of a computer, such as notebook computer **100** in **Figure 1,** in which code or instructions implementing the processes of the present invention may be located. Data processing system **200** employs a peripheral component interconnect (PCI) local bus architecture. Although the depicted example employs a PCI bus, other bus architectures such as Accelerated Graphics Port (AGP) and Industry Standard Architecture (ISA) may be used. Processor **202** and main memory **204** are connected to PCI local bus **206** through PCI bridge **208.** PCI bridge **208** also may include an integrated memory controller and cache memory for processor **202.** Additional connections to PCI local bus **206** may be made through direct component interconnection or through add-in boards. In the depicted example, local area network (LAN) adapter **210,** small computer system interface SCSI host bus adapter **212,** and expansion bus interface **214** are connected to PCI local bus **206** by direct component connection. In contrast, audio adapter **216,** graphics adapter **218,** and power management **219** are connected to PCI local bus **206.** Expansion bus interface **214** provides a connection for a keyboard and touchpad **220,** modem **222,** and additional memory **224.** SCSI host bus adapter **212** provides a connection for hard disk drive **226** and CD-ROM drive **228.**

An operating system runs on processor **202** and is used to coordinate and provide control of various components within data processing system **200** in **Figure 2.** The operating system may be a commercially available operating system, such as OS/2, which is available from International Business Machines Corporation. "OS/2" is a trademark of International Business Machines Corporation. Those of ordinary skill in the art will appreciate that the hardware in **Figure 2** may vary depending on the implementation. Other internal hardware or peripheral devices, such as flash ROM (or equivalent nonvolatile memory) or optical disk drives and the like, may be used in addition to or in place of the hardware depicted in **Figure 2.** Also, the processes of the present invention may be applied to a multiprocessor data processing system.

As a further example, data processing system **200** may be a PDA device, which is configured with ROM and/or flash ROM in order to provide non-volatile memory for storing operating system files and/or user-generated data. In these examples, data processing system **200** is powered by a battery or other portable power source.

The depicted example in **Figure 2** and above-described examples are not meant to imply architectural limitations. For example, data processing system **200** also may be a notebook computer or hand held computer in addition to taking the form of a PDA.

The processes of the present invention are performed by processor **202** using computer implemented instructions, which may be located in a memory such as, for example, main memory **204,** memory **224,** or in one or more peripheral devices **226-228.** Furthermore, the processes of the present invention may be implemented with power management **219.** Power management **219** may include, for example, registers, Basic Input Output System (BIOS), and tables used to perform power control management on hardware in data processing system **200.** Power management functions and processes also may be implemented in an operating system on data processing system **200.**

The present invention provides a method, apparatus, and computer implemented instructions for managing power consumption in a data processing system to maximize performance while maintaining power resources sufficient to run the computer for a desired or requested amount of time. The mechanism allows a user to enter or select an amount of battery lifetime required. The mechanism monitors the state of the battery and the current time remaining and adjusts components in the computer to consume power at a rate to allow the battery to last for the remaining time.

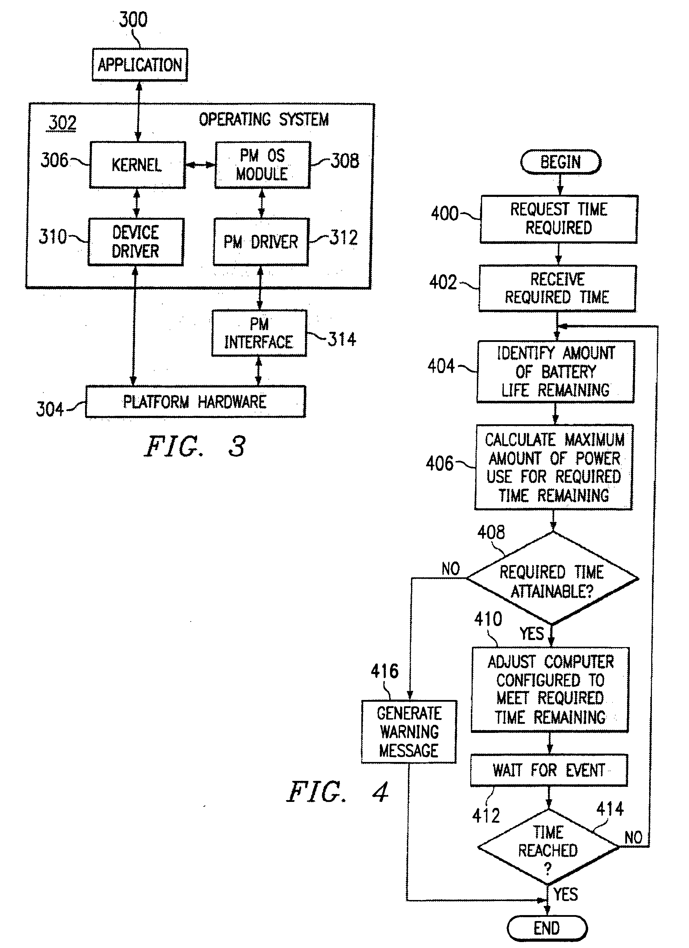

With reference now to **Figure 3,** a diagram of components used in power management based on a required battery life is depicted in accordance with a preferred embodiment of the present invention. In this example, a user may use application **300,** which interacts with operating system **302** and platform hardware **304.** Operating system **302** includes a kernel **306,** a power management (PM) operating system (OS) module **308,** a device driver 310, and a power management driver **312**. Kernel **306** is a part of operating system **302,** resides in memory at all times, and provides the basic services. Kernel **306** is the part of operating system **302** that is closest to the platform hardware **304** and may activate the hardware directly or interface to another software layer, such as device driver **310,** which drives the hardware.

PM OS module **308** provides processes for use in power management of a data processing system. This module may provide a user interface to allow a user to change various power management features, such as, for example, processor speed, sleep times, and display intensity. Additionally, PM OS module **308** also may provide information to the user, such as a display of present power settings and available battery life.

Power management driver **312** interacts with power management interface **314** to provide control of platform hardware **304.** Power management interface **314** may be implemented as power management **219** in **Figure 2.** This interface may be implemented using a number of different standards. For example, this interface may be implemented using the Advanced Configuration and Power Interface (ACPI) Specification. This specification provides for various power management functions, such as enabling computers to come on instantly when accessed by a user and to remain available to perform automated tasks after they are turned off. This specification sets forth a register-level interface to core power management functions and a descriptive interface for additional system specific hardware features. ACPI is compatible presently with existing power management and configuration interfaces, while providing processor architecture and operating system-independent implementation. More information may be found on ACPI may be found in the Advanced Configuration and Power Interface Specification, which is found at http://www.teleport.com/~acpi/.

In the depicted example, PM OS module **308** may implement the power management mechanism of the present invention. Alternatively, this mechanism may be implemented elsewhere, such as in application **300.** A user may enter the amount of time required through a graphical user interface. The mechanism of the present invention continually monitors the state of the battery through various calls to platform hardware **304** through PM driver **312** and PM interface **314.** Battery state information may be obtained from a battery system including an embedded controller, which is able to identify battery capacity. More information on such a system may be found in the Advanced Configuration and Power Interface Specification.

In addition, the mechanism of the present invention monitors the amount of required time remaining. Based on these factors, the mechanism of the present invention will adjust the configuration of the data processing system to allow the data processing system to operate until the remaining time has expired. The mechanism is set to optimize the performance of the data processing system, while meeting the time constraints. In the depicted examples, the alteration in the configuration of the data processing system may take various forms, such as, for example, display intensity, processor speed, activating devices, and deactivating devices. These changes in configuration are implemented through PM OS module **308** generating calls to platform hardware **304** through PM driver **312** and PM interface **314.**

In one exemplary implementation, the mechanism of the present invention will control the speed of the processor, such that the battery life lasts until the required time has expired. This monitoring and adjusting processor speed may be performed in response to various events. These events may be based on a clock, a change in processing resources required, and use of a peripheral device, such as a hard disk drive or a modem.

In this manner, the mechanism of the present invention provides a method for controlling a charge life for a limited power source, such as a battery, based on a specified time that power is required for the computer. This mechanism provides an optimal amount of performance from the computer, while ensuring that the battery lasts for the time that the battery is needed.

With reference now to **Figure 4,** a flowchart of a process for power management in a data processing system is depicted in accordance with a preferred embodiment of the present invention. The processes illustrated in **Figure 4** may be implemented in a number of places. For example, these processes may be implemented in PM OS module **308** or application **300** in **Figure 3.** Additionally, the processes may be implemented in a BIOS for the data processing system.

The process is initiated in response to a user input indicating that power management based on time requirements is desired. The process begins by requesting the time required (step **400).** This step may be accomplished by displaying a message in a window or dialog box along with an input field or controls to set the required time. The process then receives the required time (step **402).** In response to receiving this input, an amount of battery power life remaining is identified (step **404).** The amount of battery power life remaining may be identified using methods and a battery system as described in the Advanced Configuration and Power Interface Specification.

A maximum amount of power use for the required time is calculated (step **406).** This calculation may involve a number of factors. For example, this step will include identifying devices requiring power. These devices requiring power include, for example, a modem, a speaker, a hard disk drive, a processor, a CD-ROM drive, a network card, a fan device, and a display. The amount of power being drawn by the devices is calculated by this step. This resource usage is used to determine the amount of power that will be used during the required time remaining.

A determination is then made as to whether the required time can be met based on the current power usage (step **408**). If the required time can be met, the computer configuration is adjusted to maximize the performance of the system and still meet the required time remaining (step **410**). These adjustments may be made using devices and processes as described in the Advanced Configuration and Power Interface Specification. This adjustment may include increasing performance of various devices, such as, for example, increasing the amount of time before a hard drive is shut down, increasing the intensity of the display in the system, or increasing processor speed. The process then waits for an event (step **412).** This event may take various forms, for example, a clock cycle, a user input increasing the intensity of the display, a user or program input requiring access to a storage device, initiation of a communications link using a modem.

A determination is then made as to whether the required amount of time has been reached (step **414**). If the required amount of time has not been reached, the process returns to step **404** as described above. Otherwise, the process terminates.

With reference again to step **408,** if the amount of battery power available is not sufficient to allow the data processing system to run for the required amount of time remaining, a warning message is generated (step **416**) with the process terminating thereafter. This warning message may take various forms, such as a visual display, an audible alert, or a combination of visual and audible alerts.

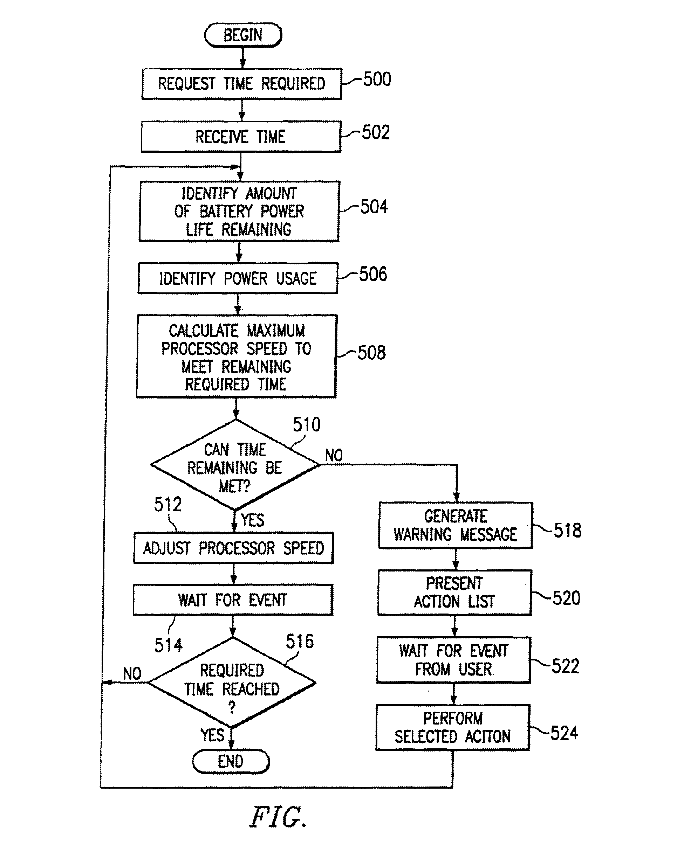

These processes may be applied to a number of different devices in the data processing system as described above. One particular device of interest is the processing unit, which may contain one or more microprocessors. Typically, the processing unit requires the highest amount of power. Power usage goes up with processor speed.
Turning next to **Figure 5,** a flowchart of a power management process for controlling processor speed in a data processing system is depicted in accordance with a preferred embodiment of the present invention. The processes, illustrated in **Figure 5,** focus on controlling the speed of a processor to meet a required time during which the power source is to be available.

The process in **Figure 5** begins by requesting the required amount of time (step **500).** The amount of time is received (step **502).** An amount of battery power life remaining is identified (step **504).** A power usage is then identified (step **506).** The power usage in step **506** includes all devices using power within the data processing system, such as, for example, the processor unit, the display, the modem, and the speaker. A maximum processor speed that can be used to meet the remaining required time is calculated (step **508**). A determination is made as to whether the time can be met based on the calculation in step **508** (step **510**). If the required time remaining can be met, the processor speed is adjusted to the maximum processor speed calculated (step **512**). The processor speed may be adjusted in a number of ways. Typically, the clock for the processor is controlled. Presently available processors, such as those from Intel Corporation, provide registers or other controls, which may be used to control the processor clock logic for the processor. More details may be found in the Advanced Configuration and Power Interface Specification.

The process then waits for an event (step **514**). In response to an event, a determination is made as to whether the required time has been reached (step **516).** If the required time has not been reached, the process returns to step **504** as described above. Otherwise, the process terminates.

With reference again to step **510**, if the required amount of time cannot be reached, a warning message is generated (step **518).** Optionally, an action list may be presented to the user to identify actions that can be taken to allow the data processing system to run for the required amount of time (step **520**). These actions may include, for example, reducing processor speed, reducing the intensity of the display, turning off the speaker, or turning off some other peripheral device. The process then waits for an event from the user (step **522).** In the depicted example, the event is the selection of an action from the list. The selected action is then performed (step **524)** with the process then returning to step **504** as described above.

Alternatively, rather than performing a selected action, the process may wait for the user to perform an action from an action list, such as removing or turning off a peripheral device. In this case, the event in step **524** is a user input indicating an action has been taken.

Thus, the present invention provides an improved, method, apparatus, and computer implemented instructions for power management in a situation requiring a selected amount of time with maximum performance. The maximization or optimization of performance may vary depending on the user needs. In the specific example illustrated above in **Figure 5,** the performance optimized is in terms of processor speed. Other optimizations, such as providing optimal display intensity or peripheral device performance also may be optimized using the mechanism of the present invention. Through monitoring available power remaining and calculating power usage for the desired performance optimization using the available power, the data processing system may be adjusted to provide the best performance available based on the amount of time required from the data processing system.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular data processing system.

## Claims

1. A method in a data processing system for managing power consumption for a battery in the data processing system, the method comprising:
receiving an input identifying an amount of time required for running the data processing system;
identifying an amount of available power;
responsive to the input, identifying an amount of power usage within the data processing system required to run the data processing system for the amount of time using the available power; and
setting the data processing system to the amount of power usage.

2. The method of claim 1, wherein the identifying an amount of available power, the identifying an amount of power usage, and the setting steps are performed in response to an event.

3. The method of claim 1 or 2, wherein the event is a periodic event.

4. The method of any preceding claim, wherein the event is a change in resources being used in the data processing system.

5. The method of any preceding claim, wherein the data processing system includes a processor unit and wherein the amount of power usage includes a speed of the processor unit.

6. The method of claim 5, wherein the processor unit is a single processor.

7. The method of claim 5, wherein the processors unit is a multiprocessor unit.

8. The method of claim 5, wherein setting the data processing system to the amount of power usage includes setting the processor unit to the speed.

9. The method of any preceding claim, wherein the data processing system is one of a laptop computer, a personal digital assistant, and a palmtop computer.

10. The method of any preceding claim further comprising:
determining whether the amount of time can be met based on the amount of available power.

11. The method of claim 10 further comprising:
generating a message in response to a determination that the amount of time cannot be met base on the amount of available power.

12. A method in a data processing system for managing use of battery power in a data processing system, the method comprising:
receiving a user input identifying an amount of time during which the data processing system is to be used;
detecting available battery power in the data processing system;
identifying an amount of resource usage allowing the data processing system to run for the amount of time based on the available battery power in the data processing system to form a selected amount of resource usage; and
adjusting available resources to avoid exceeding the selected amount of resource usage.

13. A data processing system for managing power consumption for a battery in the data processing system, the data processing system comprising:
receiving means for receiving an input identifying an amount of time required for running the data processing system;
first identifying means for identifying an amount of available power;
second identifying means, responsive to the input, for identifying an amount of power usage within the data processing system required to run the data processing system for the amount of time using the available power; and
setting means for setting the data processing system to the amount of power usage.

14. A data processing system for managing use of battery power in a data processing system, the data processing system comprising:
receiving means for receiving a user input identifying an amount of time during which the data processing system is to be used;
detecting means for detecting available battery power in the data processing system;
identifying means for identifying an amount of resource usage allowing the data processing system to run for the amount of time based on the available battery power in the data processing system to form a selected amount of resource usage; and
adjusting means for adjusting available resources to avoid exceeding the selected amount of resource usage.

15. A computer program comprising program code means adapted to perform the steps of claim 1 to 12 when said program is run on a computer.
